# EUROPEAN PATENT SPECIFICATION

(11) **EP 3 915 960 B1**
(45) Date of publication and mention of the grant of the patent: **14.08.2024**
(21) Application number: 20919362.2
(22) Date of filing: 02.11.2020
(51) Int. Cl.: C04B 28/08, C04B 28/00, C04B 28/26, C04B 40/00, B09B 3/21, C04B 18/04, C04B 111/20, C04B 111/27

(54) **METHOD OF PREPARATION OF AN UNFIRED BUILDING MATERIAL FROM UNDISTURBED SHIELD MUCK AND PREPARED UNFIRED BUILDING MATERIAL**
VERFAHREN ZUR HERSTELLUNG EINES UNGEBRANNTEN BAUSTOFFS AUS UNBEHANDELTEM BOHRKOPFSCHLAMM UND ERHALTENER UNBRANNTER BAUSTOFF
PROCÉDÉ DE PRÉPARATION D'UN MATÉRIAU DE CONSTRUCTION SANS CUISSON À PARTIR DE BOUES DE BOUCLIER NON PERTURBÉES ET MATÉRIAU DE CONSTRUCTION PRODUIT

(30) Priority: 24.03.2020 CN 202010211686
(43) Date of publication of application: 01.12.2021
(73) Proprietor: CHINA CONSTRUCTION FIFTH ENGINEERING DIVISION CO., LTD, Changsha, Hunan 410004 (CN)
(72) Inventor: XI, Zhiqin, Changsha, Hunan 410004 (CN); LI, Shuisheng, Changsha, Hunan 410004 (CN); FU, Yanzhao, Changsha, Hunan 410004 (CN)
(74) Representative: Chas. Hude A/S
(86) International application number: PCT/CN2020/125750
(87) International publication number: WO 2021/189859

(56) References cited:
- WO-A1-2019/055789
- CN-A- 108 046 669
- CN-A- 108 046 669
- CN-A- 108 793 891
- CN-A- 109 734 395
- CN-A- 110 183 188
- CN-A- 110 183 188
- CN-A- 110 818 345
- CN-A- 111 393 117
- JP-A- 2008 094 646
- KUPWADE-PATIL KUNAL ET AL: "Investigation of activation kinetics in geopolymer paste using quasielastic neutron scattering", CONSTRUCTION AND BUILDING MATERIALS, ELSEVIER, NETHERLANDS, vol. 120, 21 May 2016 (2016-05-21), pages 181 - 188, XP029623329, ISSN: 0950-0618, DOI: 10.1016/J.CONBUILDMAT.2016.05.104

## Description

The present application claims priority to Chinese application No. 202010211686.4 filed on March 24, 2020, entitled "Unfired Building Material Containing Water-Bearing Undisturbed Shield Muck and Preparation Method Thereof.

### FIELD OF TECHNOLOGY

The present application relates to the technical field of building materials and solid waste treatment, in particular to an unfired building material containing water-bearing undisturbed shield muck and a preparation method thereof.

### BACKGROUND

Due to both high mud content and high water content of water-bearing undisturbed shield muck produced in the process of shield tunneling, it will cause potential danger if the muck is not treated in time. First of all, existing muck disposal sites in cities are seriously insufficient, and many cities are faced with the situation of no land for piling up muck; secondly, no grass grows near the muck disposal sites, which has seriously affected or even damaged the surrounding ecological environment; and finally, with the gradual increase in the stockpiling amount of muck, the risk is also higher, and once an accident occurs, the consequences are unimaginable.

Due to the high water content of the water-bearing undisturbed shield muck, it is necessary to perform dehydration treatment on water-bearing undisturbed shield muck first in the process of resource recycling and utilizing them by using traditional technology, which leads to higher recovery costs. Document CN 108 046 669 A discloses a method of making a geopolymer product comprising fly ash, dried and crushed shield muck and alkaline activators.

Due to the influence of hydrogeological conditions and other factors in the shield zone, the muck produced during shield tunneling have a relatively complex composition which is generally of all kinds of moderately weathered, highly weathered or completely weathered clay rocks or soil layers, as well as some gravel and sand, which makes it extremely difficult to dehydrate the undisturbed muck. The traditional dehydration method is nothing more than airing or drying, but the former is too inefficient, while the latter is obviously not economically cost-effective. For soil-rock mixed muck, the traditional screening is inefficient, while for muck of clay rocks or soil layers containing less gravel, the dehydration by the traditional method is too costly. Therefore, the existing treatment and utilization methods need to be changed urgently. If the undisturbed muck may be directly used without dehydration, the cost of front-end treatment of the muck will be greatly reduced, meanwhile, the added value of back-end products thereof will be increased.

When the muck is dehydrated and reused, it is difficult to achieve a uniform state because of the agglomeration caused by clay particles in the muck after adding liquid to the dry muck, which is not conductive to stirring. In addition, a separate dehydration process is costly, and a screening after dehydration is also very difficult.

As the undisturbed shield muck contains water and includes many coarse particles, it is conceivable that the strength of the finished product thereof is difficult to meet the strength requirements of basic building materials; secondly, it is difficult to mix water-bearing undisturbed muck with active waste slags to a uniform state.

### SUMMARY

Therefore, the present application is directed to the characteristic of high water content of water-bearing undisturbed shield muck and the problem that water-bearing undisturbed shield muck is difficult to be efficiently dehydrated and screened, and ensures the water resistance and frost resistance of the prepared unfired building material while ensuring its high strength.

In order to solve the above technical problems, the present application proposes a preparation method as defined in claim 1 and an unfired building material as defined in claim 8. The method of an unfired building material from water-bearing undisturbed shield muck, is characterized in that the unfired building material is prepared from the following raw materials in parts by weight: 1 to 80 parts of water-bearing undisturbed shield muck by dry weight, 1 to 30 parts of active waste slags, 0.1 to 5 parts of sodium hydroxide, 0.1 to 10 parts of sodium silicate and 1 to 31.5 parts of water, and is prepared according to the following steps::
S1: weighing active waste slags, sodium silicate, water-bearing undisturbed shield muck with a water content of 10% or more and water according to weight proportion, mixing and crushing the weighed active waste slags, sodium silicate, water-bearing undisturbed shield muck and water until the content of coarse particles in the mixed water-bearing undisturbed shield muck does not exceed 10%, to obtain a Mixture I; wherein the coarse particles are particles with a particle size greater than 4.75 mm or 5 mm, and the water-bearing undisturbed shield muck is shield muck that has not been dehydrated; wherein the active waste slags are fly ash and/or blast-furnace slags;
S2: adding sodium hydroxide to the Mixture I according to weight proportion, and stirring well to obtain a Mixture II; and
S3: pouring the Mixture II into a mould and vibrating it, curing and demoulding to obtain the unfired building material containing water-bearing undisturbed shield muck.

According to an embodiment of the present application, in Step S1, the active waste slags are mixed with the sodium silicate well, and then a resulting mixture is added to the water and the water-bearing undisturbed shield muck for crushing and mixing.

According to an embodiment of the present application, in Step S2, the Mixture II has a fluidity greater than 140 mm.

According to an embodiment of the present application, in Step S3, the mould is vibrated while pouring the Mixture II into the mould.

According to an embodiment of the present application, in Step S1, the active waste slags have a mesh size of more than 200 mesh.

According to an embodiment of the present application, in Step S2, the sodium hydroxide is solid flake or granular analytically pure.

According to an embodiment of the present application, in Step S1, the sodium silicate has a fineness of more than 100 mesh and a modulus of 2.3 to 3.0.

The present application also proposes an unfired building material containing water-bearing undisturbed shield muck prepared by the above preparation method.

Compared with the prior art, the present application has the following beneficial effects: in the present application, water-bearing undisturbed shield muck is mixed with active waste slags, sodium silicate and water according to weight proportion and crushed until the content of coarse particles with a particle size greater than 4.75 mm or 5 mm in the mixed material does not exceed 10%, so that the mixed material may have a uniform flow state, and then a certain proportion of sodium hydroxide is added, and the mixed material is stirred until the fluidity thereof is more than 140 mm, poured into a mould, and naturally cured and demoulded to obtain the unfired building material containing water-bearing undisturbed shield muck. By adding a certain proportion of water to the water-bearing undisturbed shield muck, the muck particles are dispersed, making the muck easier to be stirred compared to the dry muck, and the muck particles and the active waste slags come into sufficient contact, which makes the mixed material achieve a preliminary homogenous state. In addition, by adding sodium hydroxide to the mixed material, a large number of tiny bubbles are generated and gradually released during the dissolution process. At the same time, a large amount of heat is released in the dissolution process of sodium hydroxide, which raises the temperature of the mixed material and intensifies the release and diffusion of the tiny bubbles. With the external force of stirring, the tiny bubbles are evenly dispersed in the mixed material, making the mixed material further dispersed to form a uniform flow, which ensures the homogeneity of the unfired building material containing water-bearing undisturbed shield muck after being moulded, that is, ensuring higher strength of the unfired building material while ensuring less dispersion thereof. Compared with the technical solution for preparing unfired building material by using fine-grained muck obtained after drying and screening the water-bearing undisturbed shield muck in the prior art, the intermediate dehydration and screening processes and links are omitted in the technical solution of the present application, thereby greatly reducing the production cost, and making the production of unfired building material from water-bearing undisturbed shield muck a reality, such that a new method for resource utilization of water-bearing undisturbed shield muck is provided.

The unfired building material made from water-bearing undisturbed shield muck proposed in the present application has high compressive strength and excellent water and frost resistance.

### BRIEF DESCRIPTION OF THE DRAWINGS

The features and advantages of the present application will be understood more clearly by referring to the drawings which are schematic and should not be construed as limiting the present application in any way. In the drawings:
FIG. 1 is a process flow chart showing a preparation method of an unfired building material made from water-bearing undisturbed shield muck of the present application.
FIG. 2a shows stress-strain curves of solidified specimens under uniaxial compression after being naturally cured for 28 days according to a pouring and manufacturing process of Solution 1 of the present application.
FIG. 2b shows a failure model of solidified specimens after being naturally cured for 28 days according to a pouring and manufacturing process of Solution 1 of the present application.
FIG. 2c shows stress-strain curves of solidified specimens under uniaxial compression after being naturally cured for 28 days according to a pouring and manufacturing process of Solution 2 of the present application.
FIG. 2d shows a failure model of solidified specimens after being naturally cured for 28 days according to a pouring and manufacturing process of Solution 2 of the present application.
FIG. 2e shows stress-strain curves of solidified specimens under uniaxial compression after being naturally cured for 28 days according to a pouring and manufacturing process of Solution 3 of the present application.
FIG. 2f shows a failure model of solidified specimens after being naturally cured for 28 days according to a pouring and manufacturing process of Solution 3 of the present application.
FIG. 2g shows stress-strain curves of solidified specimens under uniaxial compression after being naturally cured for 28 days according to a pouring and manufacturing process of Solution 4 of the present application.
FIG. 2h shows a failure model of solidified specimens after being naturally cured for 28 days according to a pouring and manufacturing process of Solution 4 of the present application.
FIG. 2i shows stress-strain curves of solidified specimens under uniaxial compression after being naturally cured for 28 days according to a pouring and manufacturing process of Solution 5 of the present application.
FIG. 2j shows a failure model of solidified specimens after being naturally cured for 28 days according to a pouring and manufacturing process of Solution 5 of the present application.
FIG. 2k shows stress-strain curves of solidified specimens under uniaxial compression after being naturally cured for 28 days according to a pouring and manufacturing process of Solution 6 of the present application.
FIG. 2l shows a failure model of solidified specimens after being naturally cured for 28 days according to a pouring and manufacturing process of Solution 6 of the present application.
FIG. 3a shows stress-strain curves of solidified specimens under uniaxial compression after being cured at 60°C for 3 days according to a pouring and manufacturing process of Solution 1 of the present application.
FIG. 3b shows a failure model of solidified specimens after being cured at 60°C for 3 days according to a pouring and manufacturing process of Solution 1 of the present application.
FIG. 3c shows stress-strain curves of solidified specimens under uniaxial compression after being cured at 60°C for 3 days according to a pouring and manufacturing process of Solution 2 of the present application.
FIG. 3d shows a failure model of solidified specimens after being cured at 60°C for 3 days according to a pouring and manufacturing process of Solution 2 of the present application.
FIG. 3e shows stress-strain curves of solidified specimens under uniaxial compression after being cured at 60°C for 3 days according to a pouring and manufacturing process of Solution 3 of the present application.
FIG. 3f shows a failure model of solidified specimens after being cured at 60°C for 3 days according to a pouring and manufacturing process of Solution 3 of the present application.
FIG. 3g shows stress-strain curves of solidified specimens under uniaxial compression after being cured at 60°C for 3 days according to a pouring and manufacturing process of Solution 4 of the present application.
FIG. 3h shows a failure model of solidified specimens after being cured at 60°C for 3 days according to a pouring and manufacturing process of Solution 4 of the present application.
FIG. 3i shows stress-strain curves of solidified specimens under uniaxial compression after being cured at 60°C for 3 days according to a pouring and manufacturing process of Solution 5 of the present application.
FIG. 3j shows a failure model of solidified specimens after being cured at 60°C for 3 days according to a pouring and manufacturing process of Solution 5 of the present application.
FIG. 3k shows stress-strain curves of solidified specimens under uniaxial compression after being cured at 60°C for 3 days according to a pouring and manufacturing process of Solution 6 of the present application.
FIG. 3l shows a failure model of solidified specimens after being cured at 60°C for 3 days according to a pouring and manufacturing process of Solution 6 of the present application.
FIG. 4 shows stress-strain curves of unfired bricks containing water-bearing undisturbed shield muck under uniaxial compression according to Embodiment 1 of the present application.
FIG. 5 shows flexural stress-displacement curves of unfired bricks containing water-bearing undisturbed shield muck according to Embodiment 1 of the present application.
FIG. 6 shows stress-strain curves of unfired bricks containing water-bearing undisturbed shield muck under uniaxial compression after being soaked in water for 4 days according to Embodiment 1 of the present application.
FIG. 7 shows stress-strain curves of unfired bricks containing water-bearing undisturbed shield muck under uniaxial compression after being subjected to 25 freeze-thaw cycles according to Embodiment 1 of the present application.
FIG. 8 shows an appearance morphology of unfired bricks containing water-bearing undisturbed shield muck after being subjected to 25 freeze-thaw cycles according to Embodiment 1 of the present application.
FIG. 9 shows stress-strain curves of unfired bricks containing water-bearing undisturbed shield muck under uniaxial compression according to Embodiment 2 of the present application.
FIG. 10 shows flexural stress-displacement curves of unfired bricks containing water-bearing undisturbed shield muck according to Embodiment 2 of the present application.
FIG. 11 shows stress-strain curves of unfired bricks containing water-bearing undisturbed shield muck under uniaxial compression after being soaked in water for 4 days according to Embodiment 2 of the present application.
FIG. 12 shows stress-strain curves of unfired bricks containing water-bearing undisturbed shield muck under uniaxial compression after being subjected to 25 freeze-thaw cycles according to Embodiment 2 of the present application.
FIG. 13 show an appearance morphology of unfired bricks containing water-bearing undisturbed shield muck after being subjected to 25 freeze-thaw cycles according to Embodiment 2 of the present application.
FIG. 14 shows stress-strain curves of solidified specimens containing water-bearing undisturbed shield muck under uniaxial compression after being naturally cured for 28 days according to Embodiment 3 of the present application.
FIG. 15 shows a failure model of solidified specimens containing water-bearing undisturbed shield muck after being naturally cured for 28 days according to Embodiment 3 of the present application.
FIG. 16 shows stress-strain curves of solidified specimens containing water-bearing undisturbed shield muck under uniaxial compression after being naturally cured for 28 days according to Embodiment 4 of the present application.
FIG. 17 shows a failure model of solidified specimens containing water-bearing undisturbed shield muck after being naturally cured for 28 days according to Embodiment 4 of the present application.
FIG. 18 shows stress-strain curves of solidified specimens containing water-bearing undisturbed shield muck after being naturally cured for 28 days according to Embodiment 5 of the present application.
FIG. 19 shows a failure model of solidified specimens containing water-bearing undisturbed shield muck after being naturally cured for 28 days according to Embodiment 5 of the present application.

### DETAILED DESCRIPTION

In order to make the above-mentioned objectives, features and advantages of the present application more obvious and understandable, specific embodiments of the present application are described in detail below in conjunction with the accompanying drawings. Many specific details are explained in the following descriptions to facilitate a full understanding of the present application. However, the present application may be implemented in many ways other than those described herein. Those skilled in the art can make similar improvements without violating the concept of the present application. Therefore, the present application is not limited by the specific embodiments disclosed below.

In the present application, first a research on the best pouring and manufacturing process of an unfired building material from water-bearing undisturbed shield muck is provided as follows:

naturally airing or oven drying moderately weathered conglomerate water-bearing undisturbed shield muck, crushing and screening out muck of less than 2 mm, and manually preparing wet muck with a water content of 45%, wherein the mass ratio of fly ash to dry muck is 0.3; in addition, adding 4.09% of sodium hydroxide and 7.54% of sodium silicate powder, and obtaining six kinds of specimens by designing six different pouring and manufacturing processes, which are respectively naturally curing for 28 days, and curing at 60°C for 3 days and then naturally curing for 25 days; the specific solutions are as follows:
Solution 1: preparing wet muck with a water content of 45%, adding fly ash and stirring for 5 minutes to be uniform, finally adding solid activator (sodium hydroxide and solid sodium silicate powder), stirring for 5 minutes, and putting a resulting mixture into a mould;
Solution 2: preparing wet muck with a water content of 45%, adding a well-mixed mixture of fly ash and sodium silicate and stirring for 5 minutes to be uniform, finally adding solid sodium hydroxide, stirring for 5 minutes to be uniform, and putting a resulting mixture into a mould;
Solution 3: preparing wet muck with a water content of 45%, adding a well-mixed mixture of fly ash and solid activator, stirring for 5 minutes to be uniform, and then putting a resulting mixture into a mould;
Solution 4: preparing wet muck with a water content of 45%, adding solid activator and stirring for 5 minutes to be uniform, then adding fly ash and stirring for 5 minutes to be uniform, and putting a resulting mixture into a mould;
Solution 5: preparing wet muck with a water content of 45%, adding sodium hydroxide and stirring for 5 minutes to be uniform, then adding fly ash and stirring for 5 minutes to be uniform, finally adding sodium silicate powder, stirring for 5 minutes to be uniform, and putting a resulting mixture into a mould; and
Solution 6: dissolving sodium hydroxide and sodium silicate powder in 45 mass parts of water, adding the water solution into muck and stirring for 5 minutes to be uniform, then adding fly ash into the wet muck, stirring for 5 minutes to be uniform, and putting a resulting mixture into a mould.

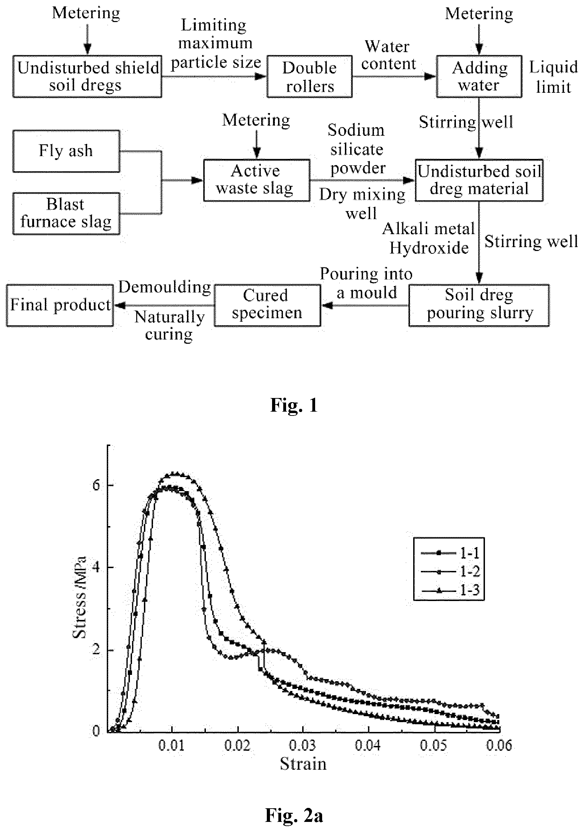

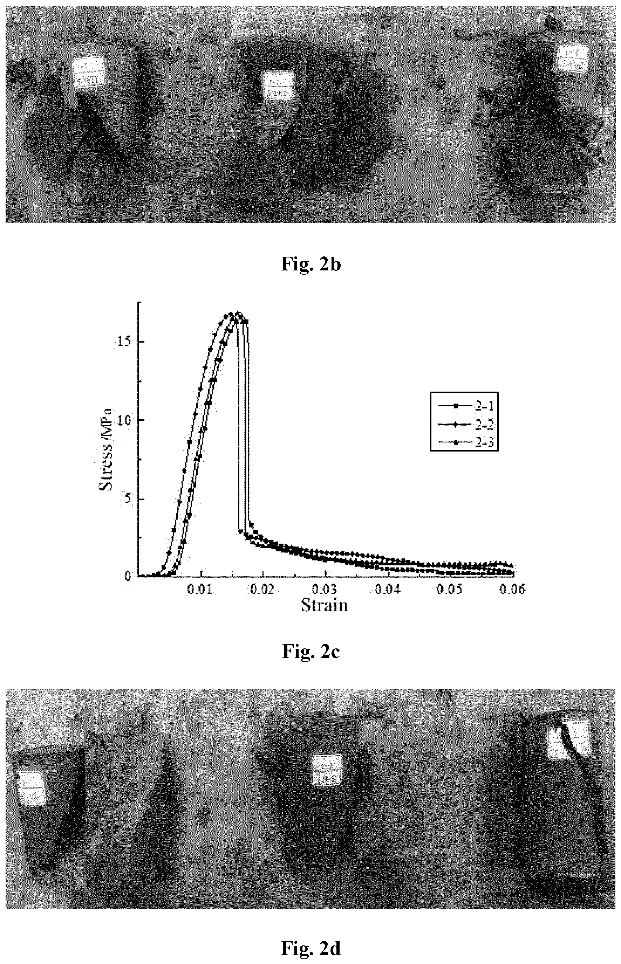

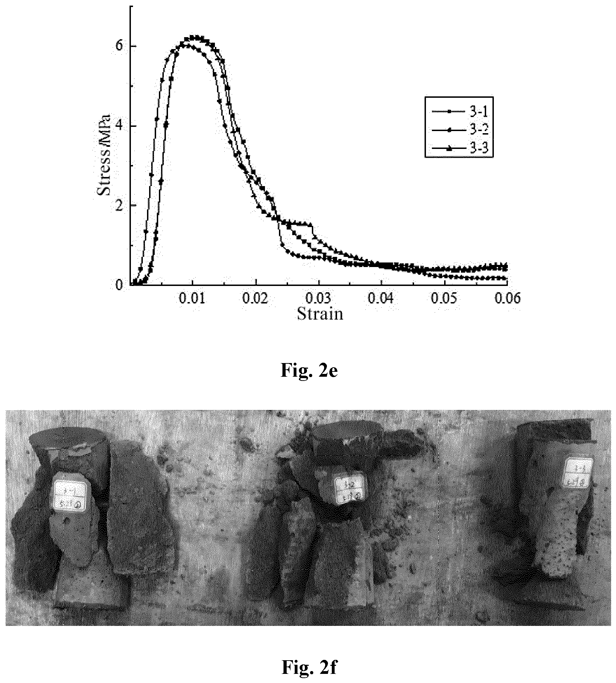

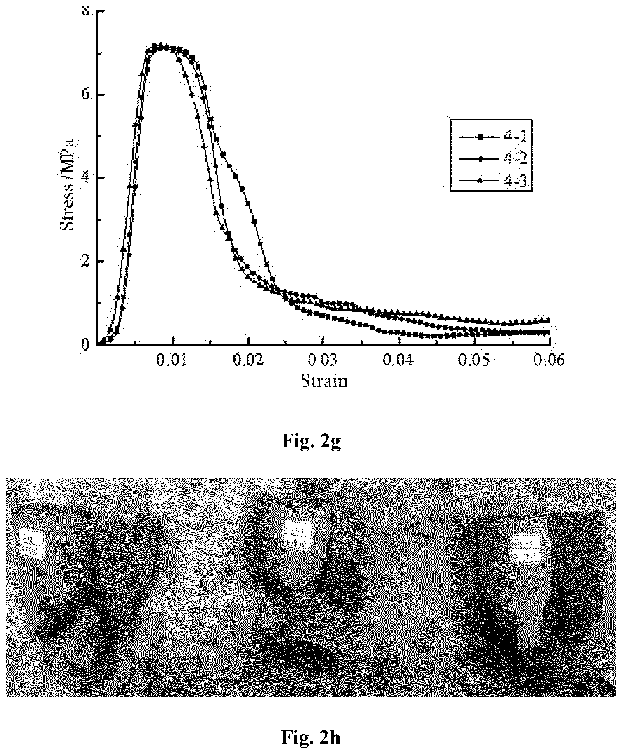

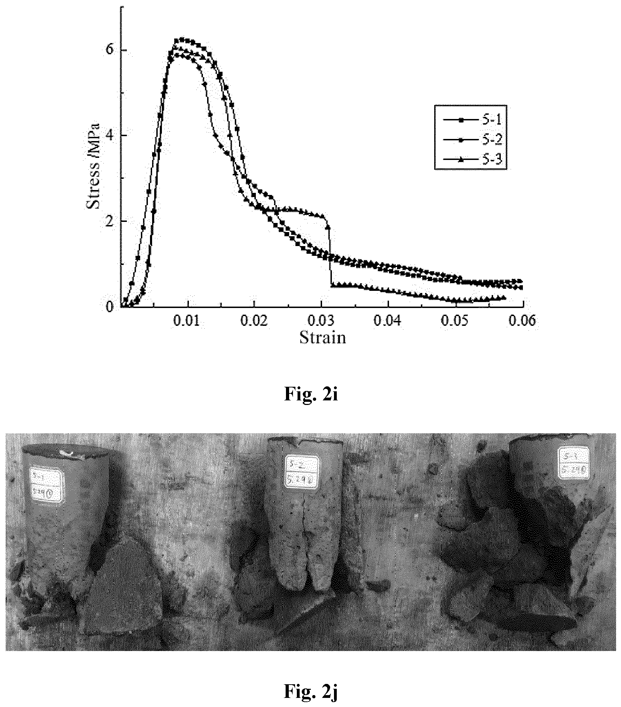

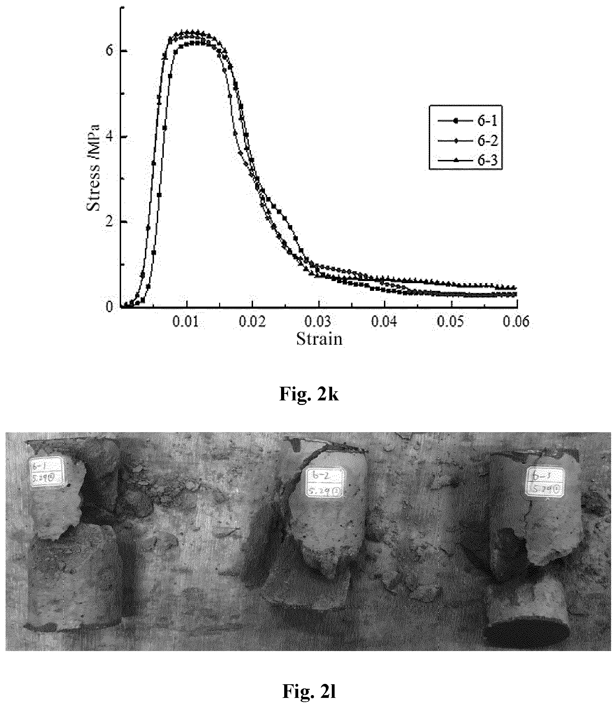

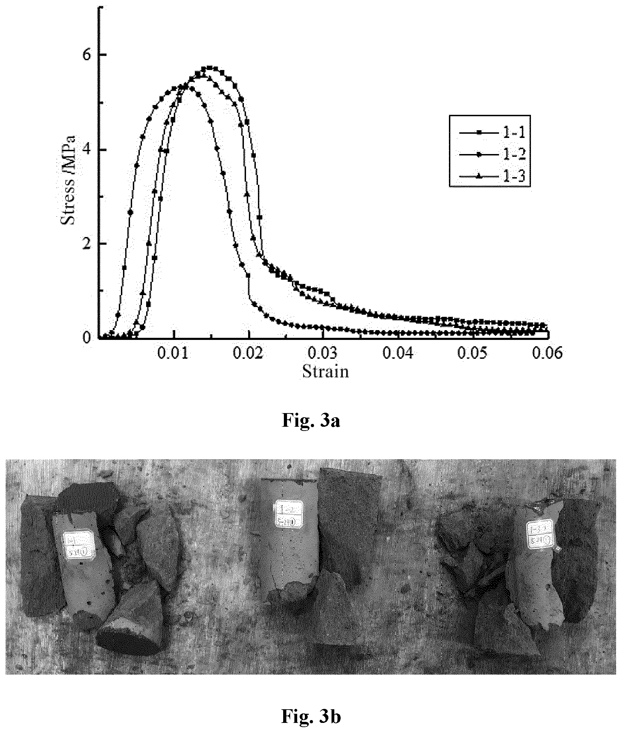

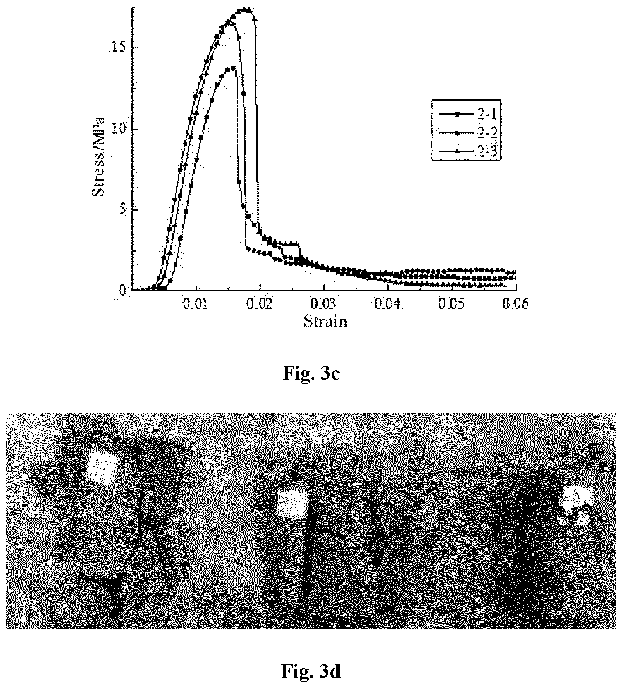

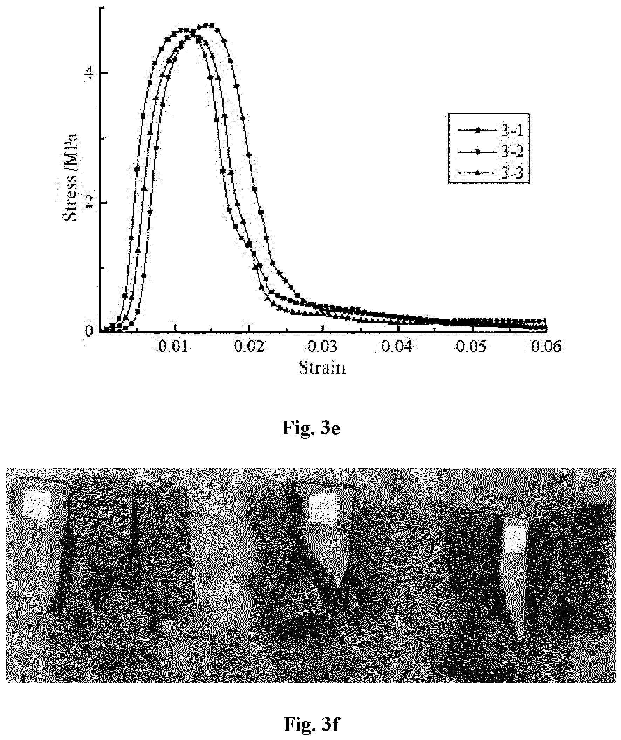

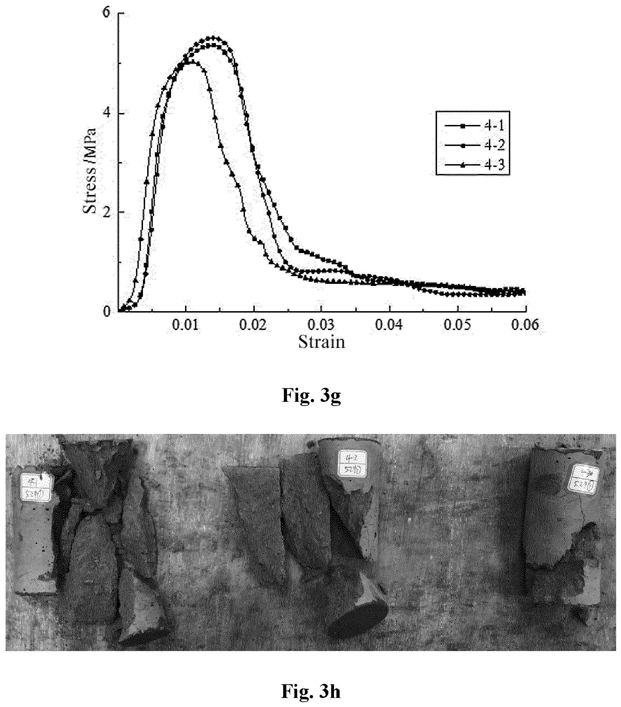

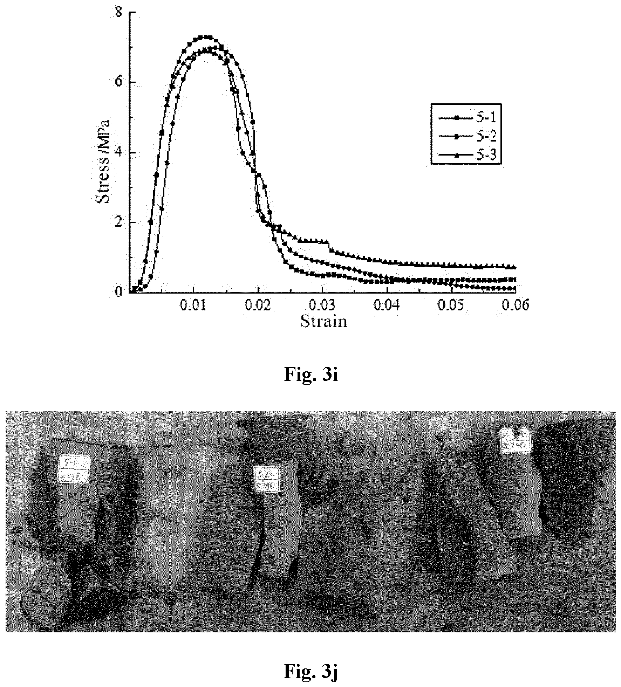

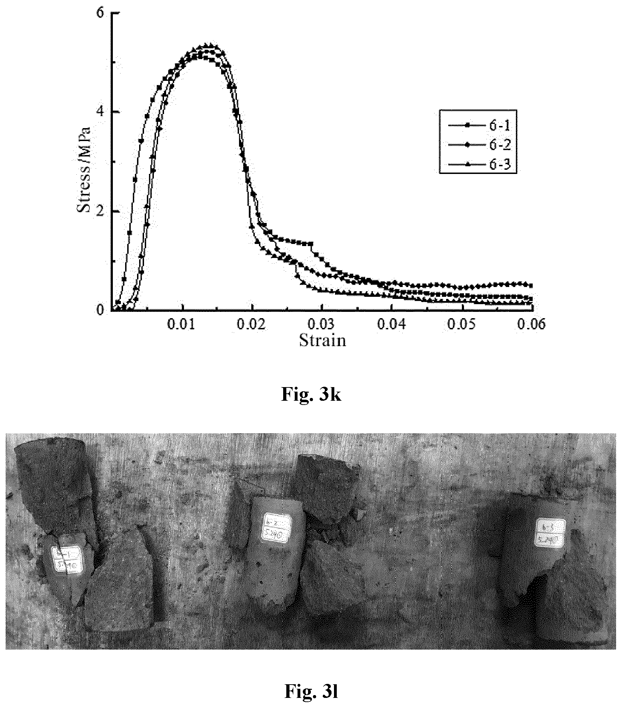

Combined with FIG. 2a to FIG. 3l, the strength results of specimens obtained respectively by naturally curing for 28 days, and curing at 60°C for 3 days and then naturally curing for 25 days are shown in Table 1:

**Table 1 Strength results of specimens obtained by six pouring and manufacturing processes**

| Process/ Solution | Solution 1 | Solution 2 | Solution 3 | Solution 4 | Solution 5 | Solution 6 |
|---|---|---|---|---|---|---|
| Naturally curing for 28 days | 6.01 MPa | 16.73 MPa | 6.13 MPa | 7.12 MPa | 6.03 MPa | 6.30 MPa |
| Curing at 60°C for 3 days and then naturally curing for 25 days | 5.52 MPa | 15.92 MPa | 4.64 MPa | 5.28 MPa | 7.05 MPa | 5.20 MPa |

According to the strength results in Table 1, under the same proportion and curing condition, the pouring and manufacturing process of Solution 2 has the best curing effect. According to the stress-strain curves and the failure model of the specimens cured for 28 days by six curing processes, compared with the other five solutions, the solidified specimens of Solution 2 exhibit overall brittle failure characteristics, have excellent strength and toughness, and can be resource utilized to unfired building materials. According to the pouring and manufacturing process with the best curing effect, the water-bearing undisturbed shield muck is further cured, to achieve the purpose of direct resource utilization.

On this basis, the present application proposes an unfired building material containing water-bearing undisturbed shield muck and a preparation method thereof.

It should be noted that:
The water-bearing undisturbed shield muck refers to shield muck without dehydration treatment, and the by dry weight refers to the weight of water-bearing undisturbed shield muck excluding water; the water content of the water-bearing undisturbed shield muck is 10% or more. In particular, for soil-like muck or muck with a high mud content, the initial water content may be as high as 30% or more.

The water-bearing undisturbed shield muck includes muck such as slightly weathered hard rock, moderately weathered to highly weathered hard rock, highly weathered to completely weathered hard rock, fresh to slightly weathered soft rock, moderately weathered to highly weathered soft rock, as well as sandy soil, silt and clay type shield muck, including moderately weathered, highly weathered, completely weathered slate, granite, conglomerate and sandstone, as well as fresh to slightly weathered tuff, phyllite, shale, mudstone, and silty clay shield muck.

An embodiment proposes a preparation method of unfired material from water-bearing undisturbed shield muck, wherein the unfired building material from water-bearing undisturbed shield muck is prepared from the following raw materials in parts by weight: 1 to 80 parts of water-bearing undisturbed shield muck (by dry weight), 1 to 30 parts of active waste slags, 0.1 to 5 parts of sodium hydroxide, 0.1 to 10 parts of sodium silicate and 1 to 31.5 parts of water. The active waste slags are fly ash and/or blast-furnace slags. The building material is prepared according to the following steps:
S1, weighing active waste slags, sodium silicate, water-bearing undisturbed shield muck with a water content of 10% or more and water according to weight proportion, mixing and crushing the weighed raw materials and until the content of coarse particles in the mixed water-bearing undisturbed shield muck does not exceed 10%, to obtain a Mixture I; further, firstly mixing the active waste slags and the sodium silicate in a mixer, then adding a resulting mixture into the water and water-bearing undisturbed shield muck for crushing and mixing by a disk-rotating wheel mill; crushing until the content of particles larger than 4.75 mm or 5 mm in the water-bearing undisturbed shield muck does not exceed 10%; the active waste slags have a mesh size of more than 200 mesh; the sodium silicate has a particle size of more than 100 mesh and a modulus of 2.3 to 3.0.
S2, adding sodium hydroxide to the Mixture I according to weight proportion, and stirring well to obtain a Mixture II; wherein, the Mixture II has a fluidity greater than 140 mm; the sodium hydroxide is solid flake or granular analytically pure.
S3, pouring the Mixture II into a mould, and vibrating the mould while pouring the Mixture II into the mould to obtain the unfired building material containing water-bearing undisturbed shield muck.

An embodiment also includes an unfired building material prepared by the above preparation method.

Related embodiments are further given below for detailed description. In the following embodiments, the unfired material containing water-bearing undisturbed shield muck is unfired brick or specimen containing water-bearing undisturbed shield muck, and other products can be made in other embodiments.

### Embodiment 1

The unfired bricks containing water-bearing undisturbed shield muck in this embodiment are prepared by the following steps:
weighing 70 parts (by dry weight) of water-bearing undisturbed shield muck, 30 parts of blast-furnace slags, 4 parts of solid sodium hydroxide, 7.5 parts of solid sodium silicate powder and 15.4 parts of water; wherein, the moderately weathered conglomerate water-bearing undisturbed shield muck with a water content of 23% is taken from a section of Changsha Metro Line 3; the particle size of the blast-furnace slags is more than 200 mesh; the sodium hydroxide is industrial grade solid flake analytically pure, with a purity of 99%; the modulus of the sodium silicate powder is 2.85, and the fineness thereof is 100 mesh; and
mixing 30 parts of blast-furnace slags and 7.5 parts of solid sodium silicate powder well in a stirrer; taking 70 parts of moderately weathered conglomerate undisturbed shield muck, adding 15.4 parts of water, and adding a well-stirred mixture of the blast-furnace slags and the solid sodium silicate powder for crushing and mixing by a disk-rotating wheel mill, until the content of coarse particles larger than 4.75 mm or 5 mm in the muck does not exceed 10%, so that the materials reach a preliminary even state, to obtain a Mixture 1; finally, adding 4 parts of solid sodium hydroxide into the Mixture I and stirring in the stirrer to be uniform, to obtain a Mixture II having a fluidity of 180 mm, pouring the Mixture II into a 240*115*53 mm standard plastic mould, vibrating the mould while pouring to ensure the moulding quality, demoulding after naturally curing with film covering for 1 day, and then continuing natural curing with film covering until the 28th day, to obtain the unfired brick containing water-bearing shield muck.

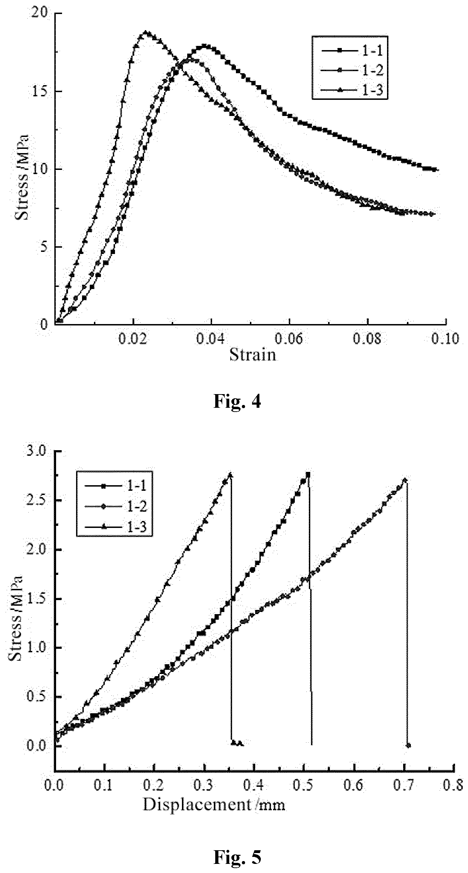

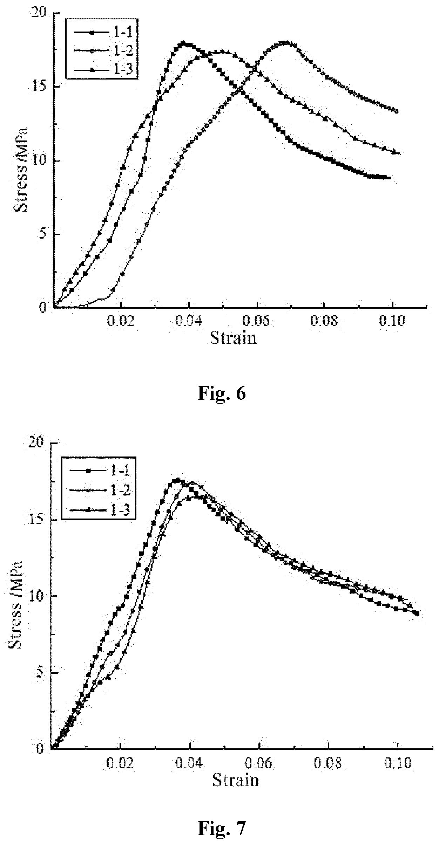

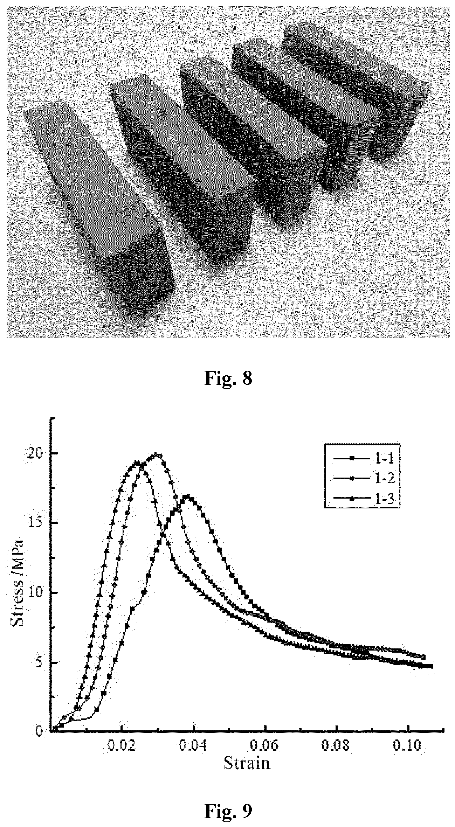

In conjunction with FIGS. 4 to 7, the test results of the specimens prepared in this embodiment show that the prepared unfired bricks containing water-bearing undisturbed shield muck have an average apparent density of 1870 kg/m³, an average compressive strength of 17.9 MPa, and an average flexural strength of 2.7 MPa; after being soaked in water for 4 days, the average compressive strength is 17.8MPa, and the average softening coefficient is 0.99; after being subjected to 25 freeze-thaw cycles, the average compressive strength is 17.2 MPa, the average strength loss is 3.9%, and the average mass loss is 0.19%. As shown in FIG. 8, the appearance morphology of the specimens is still intact after being subjected to 25 freeze-thaw cycles.

### Embodiment 2

The unfired bricks containing water-bearing undisturbed shield muck in this embodiment are prepared by the following steps:
weighing 70 parts of water-bearing undisturbed shield muck (by dry weight), 30 parts of blast-furnace slags, 4.0 parts of solid sodium hydroxide, 6.0 parts of solid sodium silicate powder and 14.5 parts of water; wherein, the highly weathered slate water-bearing undisturbed shield muck with a water content of 36% is taken from a section of Changsha Metro Line 6; the particle size of the blast-furnace slags is more than 200 mesh; the sodium hydroxide is industrial grade solid flake analytically pure, with a purity of 99%; and the modulus of the sodium silicate powder is 2.85 and the fineness of the sodium silicate powder is 100 mesh; and
mixing 30 parts of blast-furnace slags and 6.0 parts of solid sodium silicate powder well in a stirrer; taking 70 parts of highly weathered slate undisturbed shield muck, adding 14.5 parts of water, and adding a well-stirred mixture of blast-furnace slags and solid sodium silicate for crushing and mixing by a disk-rotating wheel mill, until the content of coarse particles larger than 4.75 mm or 5 mm in the muck does not exceed 10%, so that the materials reach a preliminary even state, to obtain a Mixture I; finally, adding 4.0 parts of solid sodium hydroxide to the Mixture I, and further stirring in the stirrer for 10 minutes to be uniform, to obtain a Mixture II having a fluidity of 148 mm, pouring the Mixture II into a 240*115*53 mm standard plastic mould, and vibrating the mould while pouring to ensure the moulding quality, demoulding after naturally curing with film covering for 1 day, and then continuing natural curing with film covering until the 28th day, to obtain the unfired brick containing water-bearing shield muck.

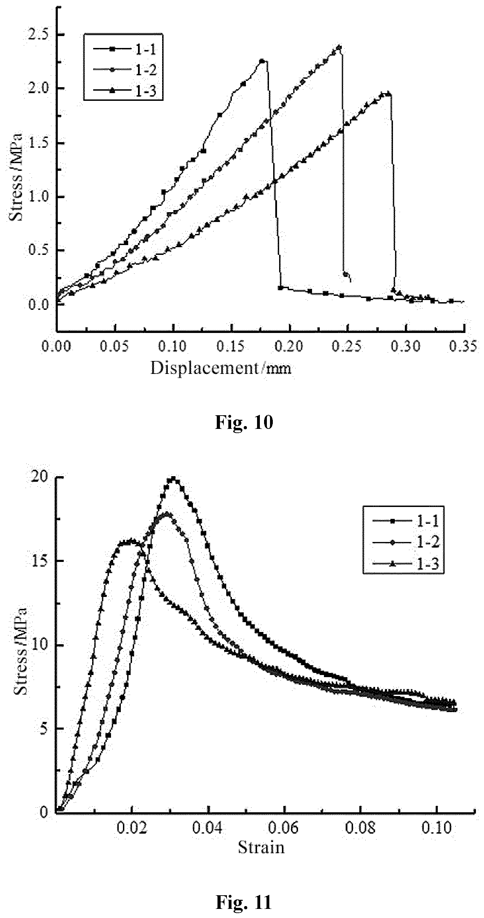

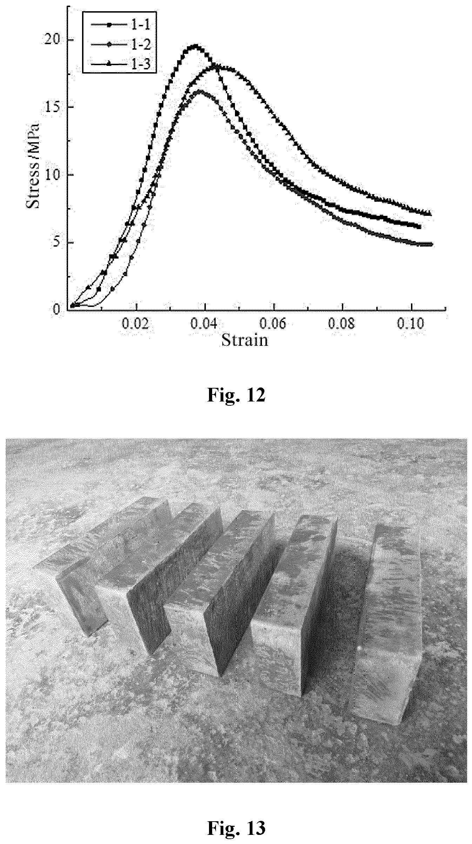

In conjunction with FIGS. 9 to 12, the test results of the specimens prepared in this embodiment show that the prepared unfired bricks containing water-bearing undisturbed shield muck have an average apparent density of 1788 kg/m³, an average compressive strength of 18.7 MPa, and an average flexural strength of 2.2 MPa; after being soaked in water for 4 days, the average compressive strength is 18.0 MPa and the average softening coefficient is 0.96; after being subjected to 25 freeze-thaw cycles, the average compressive strength is 17.9 MPa, the average strength loss is 4.3%, and the average mass loss is 0.16%. As shown in FIG. 13, the appearance morphology of the specimens is still intact after being subjected to 25 freeze-thaw cycles.

### Embodiment 3

In this embodiment, the specimens of the water-bearing undisturbed shield muck are prepared by the following steps:
taking moderately weathered conglomerate water-bearing undisturbed shield muck with a water content of 23% from the left line of a section of Changsha Metro Line 3, weighing 70 parts of the water-bearing undisturbed shield muck (by dry weight), 30 parts of fly ash, 4.09 parts of solid sodium hydroxide, 7.54 parts of solid sodium silicate powder and 31.5 parts of water; the particle size of the fly ash is more than 200 mesh; the sodium hydroxide is industrial grade solid flake analytically pure, with a purity of 99%; the modulus of the sodium silicate powder is 2.85, and the fineness thereof is 100 mesh; and
mixing 30 parts of fly ash and 7.54 parts of solid sodium silicate powder well in a stirrer; taking 70 parts of moderately weathered conglomerate undisturbed shield muck, adding 31.5 parts of water, and adding a well-stirred mixture of the fly ash and the solid sodium silicate powder for crushing and mixing by a disk-rotating wheel mill, until the content of coarse particles larger than 4.75 mm or 5 mm in the muck does not exceed 5%, so that the materials reach a preliminary even state, to obtain a Mixture I; and finally, adding 4.09 parts of solid sodium hydroxide to the Mixture I and stirring in the stirrer to be uniform, to obtain a Mixture II, pouring the Mixture II into a mould, naturally curing for 1 day, demoulding, and then continuing natural curing at room temperature until the 28th day.

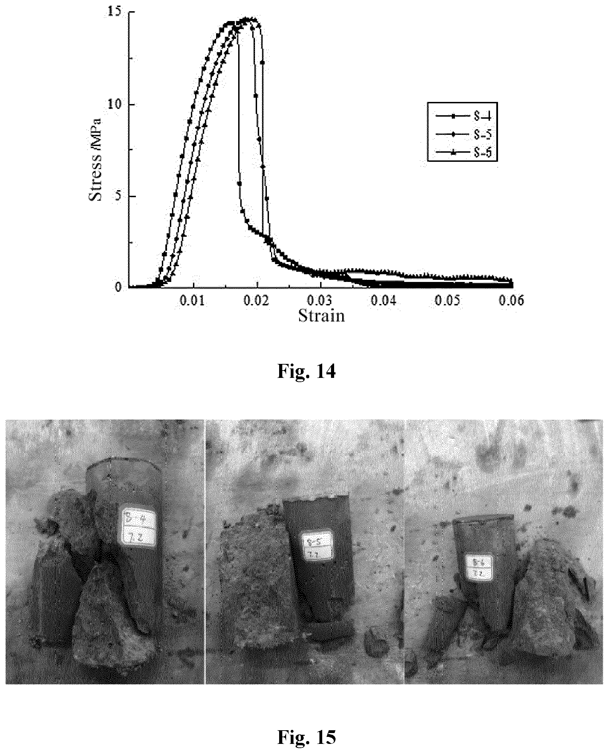

As shown in FIG. 14, it is tested that the average strength of the cured undisturbed moderately weathered conglomerate muck is 14.5 MPa; as shown in FIG. 15, the coarse particles in the undisturbed shield muck can be seen in the damaged specimens.

### Embodiment 4

In this embodiment, the unfired specimens of water-bearing undisturbed shield muck are prepared by the following steps:
taking argillaceous siltstone water-bearing undisturbed shield muck with a water content of 30% from the left line of a section of Changsha Metro Line 3, weighing 70 parts (by dry weight) of water-bearing undisturbed shield muck, 30 parts of granulated blast-furnace slags, 0.67 parts of solid sodium hydroxide, 1.18 parts of solid sodium silicate powder and 14 parts of water; wherein the granulated blast-furnace slags have a particle size of more than 200 mesh; the sodium hydroxide is industrial grade solid flake analytically pure, with a purity of 99%; the modulus of the sodium silicate powder is 2.85, and the fineness thereof is 100 mesh; and
mixing 30 parts of granulated blast-furnace slags and 1.18 parts of solid sodium silicate powder in a mixer; taking 70 parts of argillaceous siltstone undisturbed shield muck, adding 14 parts of water, and adding a well-stirred mixture of granulated blast-furnace slags and solid sodium silicate powder for crushing and mixing by a disk-rotating wheel mill, until the content of coarse particles larger than 4.75 mm or 5 mm in the muck does not exceed 5%, so that the materials reach a preliminary even state; and finally, adding 0.67 parts of sodium hydroxide to the Mixture I, and stirring to be uniform in the stirrer to obtain a Mixture II, pouring the Mixture II into a mould, demoulding after natural curing for 1 day, and then continuing natural curing at room temperature until the 28th day.

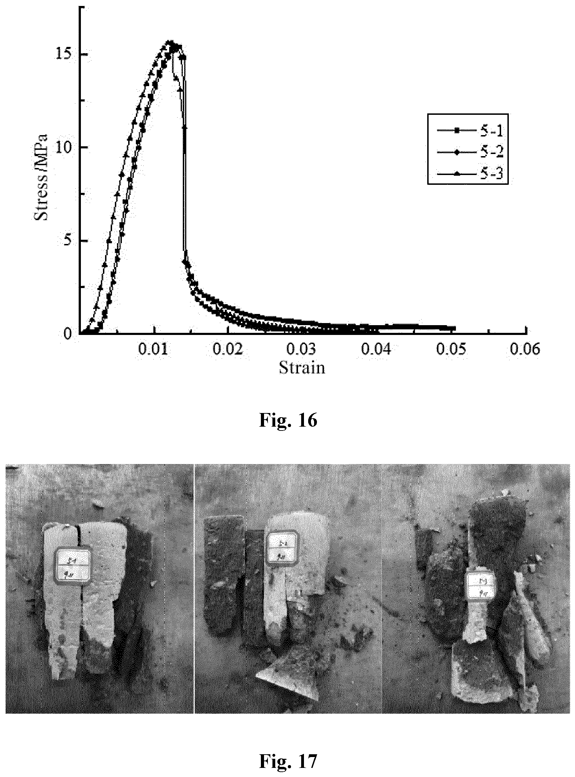

As shown in FIG. 16, it is tested that the average strength of the cured undisturbed argillaceous sandstone muck after being cured for 28 days is 15.4 MPa; as shown in FIG. 17, the coarse particles in the undisturbed shield muck can be seen in the damaged specimens.

### Embodiment 5

In this embodiment, the unfired specimens of water-bearing undisturbed shield muck are prepared by the following steps:
taking silty clay mixed sand water-bearing undisturbed shield muck with a water content of 27% from the left line of a section of Zhengzhou Metro Line 3, weighing 70 parts (by dry weight) of water-bearing undisturbed shield muck, 30 parts of granulated blast-furnace slags, 0.67 parts of solid sodium hydroxide, 1.18 parts of solid sodium silicate powder and 17.5 parts of water; the particle size of the granulated blast furnace slag is more than 200 mesh; the sodium hydroxide is industrial grade solid flake analytically pure, with a purity of 99%; the modulus of the sodium silicate powder is 2.85, and the fineness thereof is 100 mesh; and
mixing 30 parts of granulated blast-furnace slags and 1.18 parts of solid sodium silicate powder in a stirrer; taking 70 parts of silty clay mixed sand undisturbed shield muck, adding 17.5 parts of water, and adding a well-stirred mixture of granulated blast-furnace slags and solid sodium silicate powder for crushing and mixing by a disk-rotating wheel mill, until the content of coarse particles larger than 4.75 mm or 5 mm in the muck does not exceed 5%, so that the materials reach a preliminary even state, to obtain a Mixture I, and finally, adding 0.67 parts of solid sodium hydroxide to the Mixture I and stirring to be uniform in the stirrer to obtain a Mixture II, pouring the Mixture II into a mould, naturally curing for 1 day, demoulding, then continuing natural curing at room temperature until the 28th day.

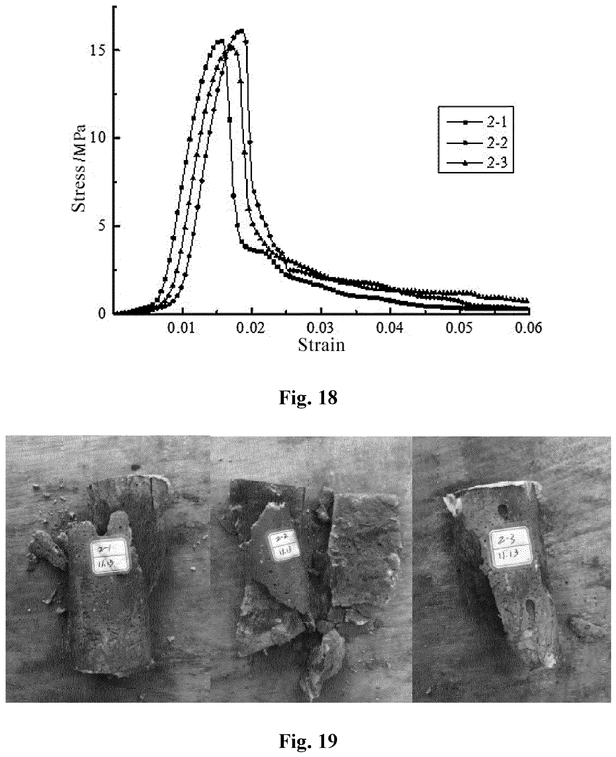

As shown in FIG. 18, it is tested that the average strength of the cured undisturbed silty clay mixed sand muck after being cured for 28 days is 15.6 MPa; as shown in FIG. 19, the coarse particles in the undisturbed shield muck can be seen in the damaged specimens.

### Other beneficial effects of the present application include:

1) The present application adopts the pouring method for moulding, by which the prepared unfired brick exhibits excellent durability such as water resistance and frost resistance in addition to meeting the basic mechanical properties such as compression resistance and flexural resistance compared with the unfired brick made by compression moulding method. Due to the fact that in the moulded specimen by compression moulding method, many unevenly distributed micropores are artificially produced, and when the compression moulding force reaches a certain value, it is difficult to compact again, that is, the internal air cannot be exhausted, thus the unfired brick made of a large amount of muck often does not exhibit the basic water resistance or frost resistance. By contrast, if the pouring method is used in directly curing the undisturbed shield muck to prepare the unfired brick, the air inside the pouring material is eliminated by vibration, so that the material can reach a dense state, which reduces the micropores inside the specimen, so as to ensure that the unfired brick made by the water-bearing undisturbed shield muck without dehydration has an excellent water resistance and frost resistance. In addition, compared with the standard unfired brick prepared by compression moulding method (its density is close to concrete, up to 2200 kg/m³ and above), the weight of the unfired brick prepared by the method in the present application is about 1800 kg/m³, which is reduced by 10% to 30%, basically having the same weight with the ordinary sintered brick.
2) The method of preparing unfired brick by directly pouring and curing the water-bearing undisturbed shield muck has the characteristics of good adaptability and replicability. All kinds of shield muck such as muck from slightly weathered hard rock, moderately weathered to highly weathered hard rock, highly weathered to completely weathered hard rock, fresh to slightly weathered soft rock, moderately weathered to highly weathered soft rock, and sand, silt, and clay (e.g., moderately weathered, highly weathered or completely weathered slate, granite, conglomerate, sandstone, etc., and fresh to slightly weathered tuff, phyllite, shale, mudstone, etc., and silty clay, etc.) can be resourced on-site to prepare unfired bricks. At the construction site such as shield tunnel or station, the muck may be disposed in time and the unfired bricks may be produced on a large scale. The treatment process and technology are simple, low cost, highly efficient, and pollution-free, through which waste is turned into wealth.
3) For the difficulties of dehydration, screening and resource utilization of the water-bearing undisturbed shield muck, the method of curing the undisturbed shield muck with active waste slags is adopted to achieve the purpose of direct resource utilization, which omits the process and cost of front-end dehydration and improves the added value of back-end products. According to the rough estimation, taking the 877,400 cubic meters of shield muck in the second bid section of Changsha Metro Line 5 as an example, the total amount is about 2,193,500 tons. Taking drying from the water content of 35% to less than 10% as an example, according to the energy consumption of 8 kg of standard coal per ton and 15 kwh power (500 CNY/ton for standard coal, 0.8 CNY/kwh for industrial power), the dehydration cost will be saved at least 35.096 million CNY
4) The best pouring and curing effect can be obtained under the same proportion and curing conditions by mixing well the active waste slags (fly ash and/or blast-furnace slag ) and sodium silicate powder firstly, then adding the water-bearing undisturbed shield muck and mixing well, and finally adding alkali metal hydroxide solid to mix well until a flowing slurry state is achieved. This is because the dissolution rate of solid sodium silicate powder with a modulus of 2.85 ≥ 200s, while the dissolution of alkali metal hydroxide in the range of room temperature solubility only needs a few seconds. By firstly mixing well the active waste slags (fly ash and/or blast furnace slag) and the sodium silicate powder and adding into the water-bearing undisturbed shield muck for stirring for 5 minutes, the mixture may be fully dissolved while the active waste slags (fly ash and/or blast-furnace slag ) may be mixed well with the muck, and then alkali metal hydroxide is added to the mixture to obtain a good flow state and make the reaction more sufficient, so as to obtain the best curing effect.
5) The method of the present application is a breakthrough in the process of curing undisturbed shield muck with alkali activated waste slags pouring method, providing a method for resource utilization of water-bearing undisturbed shield muck. Compared with the compression moulding method, the pouring method is more simple, avoids the process and energy consumption in the compression moulding, and reduces the production cost. At the same time, with the best curing process, under the same proportion and curing conditions and with 70% muck content, the solidified specimens of water-bearing undisturbed shield muck may have a strength of 14.5 MPa or more after curing for 28 days, which can be resource utilized for the production of green building materials such as unfired bricks, curbs and building blocks.
6) The treatment and resource utilization of the water-bearing undisturbed shield muck has the advantages of simple process, low cost and good applicability. A large amount of shield muck can be absorbed at the construction site, thereby saving the disposal cost and reducing the construction cost. Therefore, a new method for the on-site resource treatment and utilization of the water-bearing undisturbed shield muck is provided, which has significant social, environmental and economic benefits.

Unless otherwise defined, all technical and scientific terms used herein have the same meanings as commonly understood by those skilled in the art to which the present application belongs. The terms used in the specification of the present application are only for the purpose of describing specific embodiments, and are not intended to limit the present application. The various technical features of the above-mentioned embodiments can be combined arbitrarily, but in order to make the description concise, not all possible combinations of the technical features in the above-mentioned embodiments have been described. However, as long as there is no contradiction in the combination of these technical features, it should be considered within the scope of this specification as defined by the appended claims.

## Claims

1. A preparation method of an unfired building material from water-bearing undisturbed shield muck, **characterized in that** the unfired building material is prepared from the following raw materials in parts by weight: 1 to 80 parts of water-bearing undisturbed shield muck by dry weight, 1 to 30 parts of active waste slags, 0.1 to 5 parts of sodium hydroxide, 0.1 to 10 parts of sodium silicate and 1 to 31.5 parts of water, and is prepared according to the following steps:
S1. weighing active waste slags, sodium silicate, water-bearing undisturbed shield muck with a water content of 10% or more and water according to weight proportion,
mixing and crushing the weighed active waste slags, sodium silicate, water-bearing undisturbed shield muck and water until the content of coarse particles in the mixed water-bearing undisturbed shield muck does not exceed 10%, to obtain a Mixture I; wherein the coarse particles are particles with a particle size greater than 4.75 mm or 5 mm, and the water-bearing undisturbed shield muck is shield muck that has not been dehydrated; wherein the active waste slags are fly ash and/or blast-furnace slags;
S2. adding sodium hydroxide to the Mixture I according to weight proportion, and stirring well to obtain a Mixture II; and
S3. pouring the Mixture II into a mould and vibrating it, curing and demoulding to obtain the unfired building material containing water-bearing undisturbed shield muck.

2. The preparation method of claim 1, **characterized in that** in step S1, the active waste slags are mixed with the sodium silicate well, and then a resulting mixture is added to the water and the water-bearing undisturbed shield muck for crushing and mixing.

3. The preparation method of claim 1, **characterized in that** in step S2, the Mixture II has a fluidity greater than 140 mm.

4. The preparation method of claim 1, **characterized in that** in step S3, the mould is vibrated while pouring the Mixture II into the mould.

5. The preparation method of claim 1, **characterized in that** in step S1, the active waste slags have a mesh size of more than 200 mesh.

6. The preparation method of claim 1, **characterized in that** in step S2, the sodium hydroxide is solid flake or granular analytically pure.

7. The preparation method of claim 1, **characterized in that** in step S1, the sodium silicate has a fineness of more than 100 mesh and a modulus of 2.3 to 3.0.

8. An unfired building material prepared by the preparation method of any one of claims 1 to 7.

## Patentansprüche

1. Verfahren zur Herstellung eines ungebrannten Baustoffes aus wasserhaltigem, ungestörtem Bohrkopfschlamm,
**dadurch gekennzeichnet, dass** der ungebrannte Baustoff aus folgenden Rohstoffen in Gewichtsteilen hergestellt wird: 1 bis 80 Teile wasserhaltiger, ungestörter Bohrkopfschlamm, bezogen auf das Trockengewicht, 1 bis 30 Teile aktive Abfallschlacken, 0,1 bis 5 Teile Natriumhydroxid, 0,1 bis 10 Teile Natriumsilikat und 1 bis 31,5 Teile Wasser, und nach folgenden Schritten hergestellt wird:
S1. Abwiegen von aktiven Abfallschlacken, Natriumsilikat, wasserhaltigem ungestörtem Bohrkopfschlamm mit einem Wassergehalt von 10 % oder mehr und Wasser nach Gewichtsanteilen,
Mischen und Zerkleinern der abgewogenen aktiven Abfallschlacken, des Natriumsilikats, des wasserhaltigen ungestörten Bohrkopfschlamms und des Wassers, bis der Gehalt an groben Teilchen in dem gemischten wasserhaltigen ungestörten Bohrkopfschlamm 10 % nicht übersteigt, um ein Gemisch 1 zu erhalten; wobei die groben Teilchen Teilchen mit einer Teilchengröße von mehr als 4.75 mm oder 5 mm sind und der wasserhaltige ungestörte Bohrkopfschlamm ein Bohrkopfschlamm ist, der nicht entwässert wurde; wobei die aktiven Abfallschlacken Flugasche und/oder Hochofenschlacken sind;
S2. Zugabe von Natriumhydroxid zum Gemisch 1 entsprechend dem Gewichtsverhältnis und gutes Rühren, um ein Gemisch II zu erhalten; und
S3. Gießen der Mischung II in eine Form und Rütteln derselben, Aushärten und Entformen, um den ungebrannten Baustoff zu erhalten, der wasserhaltigen ungestörten Bohrkopfschlamm enthält.

2. Herstellungsverfahren nach Anspruch 1, **dadurch gekennzeichnet, dass** in Schritt S1 die aktiven Abfallschlacken mit dem Natriumsilikat gut vermischt werden und eine resultierende Mischung dann dem Wasser und dem wasserhaltigen ungestörten Bohrkopfschlamm zum Zerkleinern und Mischen zugegeben wird.

3. Herstellungsverfahren nach Anspruch 1, **dadurch gekennzeichnet, dass** in Schritt S2 das Gemisch II eine Fließfähigkeit von mehr als 140 mm aufweist.

4. Herstellungsverfahren nach Anspruch 1, **dadurch gekennzeichnet, dass** in Schritt S3 die Form gerüttelt wird, während das Gemisch II in die Form gegossen wird.

5. Herstellungsverfahren nach Anspruch 1, **dadurch gekennzeichnet, dass** in Schritt S1 die aktiven Abfallschlacken eine Maschenweite von mehr als 200 mesh aufweisen.

6. Herstellungsverfahren nach Anspruch 1, **dadurch gekennzeichnet, dass** in Schritt S2 das Natriumhydroxid in fester Flocken- oder Granulatform vorliegt und analytisch rein ist.

7. Herstellungsverfahren nach Anspruch 1, **dadurch gekennzeichnet, dass** in Schritt S1 das Natriumsilikat eine Feinheit von mehr als 100 mesh und einen Modulus von 2,3 bis 3,0 aufweist.

8. Ein ungebrannter Baustoff, hergestellt nach dem Herstellungsverfahren nach einem der Ansprüche 1 bis 7.

## Revendications

1. Procédé de préparation d'un matériau de construction sans cuisson à partir de matériau de déblais de protection non perturbé contenant de l'eau, **caractérisé en ce que** le matériau de construction sans cuisson est préparé à partir des matières premières suivantes en parties en poids : 1 à 80 parties de matériau de déblais de protection non perturbé contenant de l'eau en poids sec, 1 à 30 parties de résidus de déchets actifs, 0,1 à 5 parties d'hydroxyde de sodium, 0,1 à 10 parties de silicate de sodium et 1 à 31,5 parties d'eau, et est préparé selon les étapes suivantes consistant à :
S1. peser des résidus de déchets actifs, du silicate de sodium, du matériau de déblais de protection non perturbé contenant de l'eau avec une teneur en eau de 10 % ou plus et de l'eau selon une proportion en poids, mélanger et broyer les résidus de déchets actifs, le silicate de sodium, le matériau de déblais de protection non perturbé contenant de l'eau et l'eau jusqu'à ce que la teneur en particules grossières dans le matériau de déblais de protection non perturbé contenant de l'eau mélangé ne dépasse pas 10 %, pour obtenir un mélange I ; dans lequel les particules grossières sont des particules avec une taille de particule supérieure à 4,75 mm ou 5 mm, et le matériau de déblais de protection non perturbé contenant de l'eau est un matériau de déblais de protection qui n'a pas été déshydraté ; dans lequel les résidus de déchets actifs sont des cendres volantes et/ou des scories de haut fourneau ;
S2. ajouter de l'hydroxyde de sodium au mélange I selon une proportion en poids, et bien agiter pour obtenir un mélange II ; et
S3. verser le mélange II dans un moule et le faire vibrer, laisser durcir et démouler pour obtenir le matériau de construction sans cuisson contenant du matériau de déblais de protection non perturbée contenant de l'eau.

2. Procédé de préparation selon la revendication 1, **caractérisé en ce que** dans l'étape S1, les résidus de déchets actifs sont bien mélangés avec le silicate de sodium, puis un mélange résultant est ajouté à l'eau et au matériau de déblais de protection non perturbé contenant de l'eau pour broyage et mélange.

3. Procédé de préparation selon la revendication 1, **caractérisé en ce que** dans l'étape S2, le mélange II présente une fluidité supérieure à 140 mm.

4. Procédé de préparation selon la revendication 1, **caractérisé en ce que** dans l'étape S3, le moule est mis à vibrer tout en versant le mélange II dans le moule.

5. Procédé de préparation selon la revendication 1, **caractérisé en ce que** dans l'étape S1, les résidus de déchets actifs présentent une taille de maille supérieure à une maille de 200.

6. Procédé de préparation selon la revendication 1, **caractérisé en ce que** dans l'étape S2, l'hydroxyde de sodium est un flocon solide ou un granulé analytiquement pur.

7. Procédé de préparation selon la revendication 1, **caractérisé en ce que** dans l'étape S1, le silicate de sodium présente une finesse supérieure à une maille de 100 et un module de 2,3 à 3,0.

8. Matériau de construction sans cuisson préparé par le procédé de préparation selon l'une quelconque des revendications 1 à 7.
